## Europäisches Patentamt
## European Patent Office
## Office européen des brevets

(11) Numéro de publication: **0 291 364**
**A1**

(12) **DEMANDE DE BREVET EUROPEEN**

(21) Numéro de dépôt: **88400616.4**

(22) Date de dépôt: **15.03.88**

(51) Int. Cl.4: **B 29 C 45/50**
**B 29 C 45/82**

(30) Priorité: **17.03.87 FR 8703658**

(43) Date de publication de la demande:
**17.11.88 Bulletin 88/46**

(84) Etats contractants désignés: **DE ES FR GB IT**

(71) Demandeur: **Manceau, Marcel**
**12, rue du 11 novembre**
**F-37360 Rouziers (FR)**

**CONSTRUCTIONS INDUSTRIELLES D'ANJOU (CIA)**
**Zone Industrielle d'Ecouflant**
**F-49100 Angers (FR)**

(72) Inventeur: **Manceau, Marcel**
**12, rue du 11 Novembre**
**F-37360 Rouziers (FR)**

(74) Mandataire: **Schrimpf, Robert et al**
**Cabinet Regimbeau 26, Avenue Kléber**
**F-75116 Paris (FR)**

Le titre de l'invention a été modifié (Directives relatives à l'examen pratiqué à l'OEB, A-III, 7.3)

(54) **Unité d'injection pour machine d'injection.**

㊿ La présente invention concerne une unité d'injection pour machine d'injection du type comprenant un canon d'injection (20) pourvu d'une vis piston (22). Selon l'invention, l'unité d'injection comprend au moins deux paires de vérins d'injection (60, 70) placés en parallèle entre le canon d'injection (20) et la vis piston (22), aptes à assurer par traction le déplacement relatif à translation de la vis piston en rapprochement de la buse d'injection, les vérins d'injection appairés ayant des sections identiques, mais les sections des vérins différant d'une paire à l'autre, et des moyens de commande aptes à mettre en action sélectivement l'une choisie des paires de vérins d'injection, ou les deux, pour moduler la pression d'injection.

FIG.1

EP 0 291 364 A1

## Description

## "UNITE D'INJECTION POUR PRESSE"

La présente invention concerne le domaine des unités d'injection pour presse.

La présente invention concerne plus précisément une unité d'injection pour presse du type connu en soi comprenant un canon d'injection pourvu, d'une part, à une première extrémité, d'un orifice d'alimentation par lequel le produit à mouler est introduit dans le canon et, d'autre part, à une seconde extrémité, d'une buse de sortie, le canon logeant une vis piston à clapet, mobile à la fois en rotation et en translation à l'intérieur du canon, pour injecter le produit sous pression, dans un moule, à travers la buse de sortie, lorsque la vis piston est déplacée à translation vers la buse de sortie.

Des unités d'injection du type connu ci-dessus décrit sont évoquées par exemple dans les documents FR-A-2 050 781 et GB-A-1 454 513.

Le déplacement à translation de la vis piston, en rapprochement de la buse de sortie, en vue de l'injection, est généralement réalisé à l'aide d'un vérin.

La pression et la vitesse d'injection optimales dépendent à la fois de la pièce à former et de la matière injectée. De ce fait, il est souhaitable de pouvoir disposer de plusieurs pressions et vitesses d'injection. Le plus souvent les presses à injection commercialisées jusqu'ici autorisent trois pressions d'injection différentes.

Ces différentes pressions d'injection sont obtenues de nos jours en utilisant des vis pistons, et donc des canons d'injection associés, de diamètres différents. Ainsi, dans le cas précité où il est proposé trois pressions d'injection différentes, le constructeur fournit trois canons d'injection et trois vis pistons associées, interchangeables sur la presse et dont les sections sont déterminées pour répondre aux pressions requises.

Les presses à injecter comportant des canons d'injection interchangeables pour adapter la pression d'injection, ont déjà rendu de grands services. Cependant, ces presses présentent différents inconvénients.

On notera tout d'abord que le changement d'un canon et de la vis piston associée est une opération longue pendant laquelle la presse à injecter est hors service.

Par ailleurs, pour limiter au mieux le temps d'immobilisation de la presse, le changement du canon d'injection et de la vis piston associée est opéré le plus souvent alors que ces éléments sont encore à haute température. De là, les opérations de changement s'avèrent fort délicates.

La présente invention a maintenant pour but de proposer une nouvelle unité d'injection pour presse qui autorise sélectivement différentes pressions d'injection, sans requérir le changement d'un canon d'injection et de la vis piston associée.

Un autre but de la présente invention est de proposer une unité d'injection permettant de moduler la pression d'injection, par exemple au cours de phases successives de remplissage, bourrage et maintien en pression.

Un but auxiliaire de l'invention est de pouvoir disposer de différentes vitesses d'injection.

En théorie ces différents buts pourraient être atteints en modulant, à l'aide d'appareils de réglage hydrauliques, la pression et le débit de fluide de commande appliqué au vérin contrôlant le déplacement à translation de la vis piston en rapprochement de la buse de sortie.

Cependant, cette solution tout-à-fait théorique ne peut trouver application dans la pratique dans la mesure où elle exigerait, d'une part, l'utilisation d'un vérin d'injection, associé à la vis piston, surdimensionnée en diamètre, et d'autre part, l'utilisation d'une pompe ou d'un accumulateur de débit de très forte capacité pour permettre d'appliquer la vitesse requise au vérin d'injection. Cette solution entraînerait par conséquent une très forte consommation d'énergie ; cette solution est pour l'instant bannie par les utilisateurs.

Les problèmes précités sont résolus dans le cadre de la présente invention grâce à une unité d'injection pour presse du type connu en soi comprenant un canon d'injection pourvu, d'une part, à une première extrémité, d'un orifice d'alimentation par lequel le produit à mouler est introduit dans le canon, et, d'autre part, à une seconde extrémité, d'une buse de sortie, le canon logeant une vis piston à clapet, mobile à la fois en rotation et en translation à l'intérieur du canon, pour injecter le produit sous pression, dans un moule, à travers la buse de sortie, lorsque la vis piston est déplacée à translation vers la buse de sortie, cette unité d'injection comprenant en outre, selon la présente invention, deux ensembles de vérins d'injection placés en parallèle entre le canon d'injection et la vis piston, aptes à assurer le déplacement relatif à translation de la vis piston en rapprochement de la buse d'injection, les deux ensembles de vérins d'injection ayant des sections actives différentes, et des moyens de commande aptes à mettre en action sélectivement l'un choisi des ensembles de vérins d'injection, ou les deux ensembles simultanément.

Selon une caractéristique avantageuse de l'invention, chaque ensemble de vérins d'injection comprend deux vérins placés en parallèle et ayant des sections actives identiques.

De préférence, les vérins travaillent à la traction lorsqu'ils sollicitent la vis piston vers la buse de sortie, en vue de l'injection.

De préférence selon la présente invention, les deux vérins d'injection d'un même ensemble, ayant des sections identiques, sont diamètralement opposées par rapport à l'axe du canon d'injection.

Selon une caractéristique avantageuse de l'invention, les corps des vérins d'injection sont solidaires du canon d'injection tandis que les tiges de vérins sont solidaires de la vis piston. Les tiges des vérins sont avantageusement solidaires d'un plateau mobile sur lequel est fixée la vis piston.

Par ailleurs, selon l'invention, le plateau mobile sur lequel est fixée la vis piston porte avantageusement des moteurs aptes à entraîner la vis piston en rotation.

Le couple de rotation, transmis à la vis piston, peut aisément être modulé, en fonction de la matière à injecter, selon le nombre de moteur mis en service.

D'autres caractéristiques, buts et avantages de la présente invention apparaîtront à la lecture de la description détaillée qui va suivre, et en regard des dessins annexés, donnés à titre d'exemple non limitatif et sur lesquels :

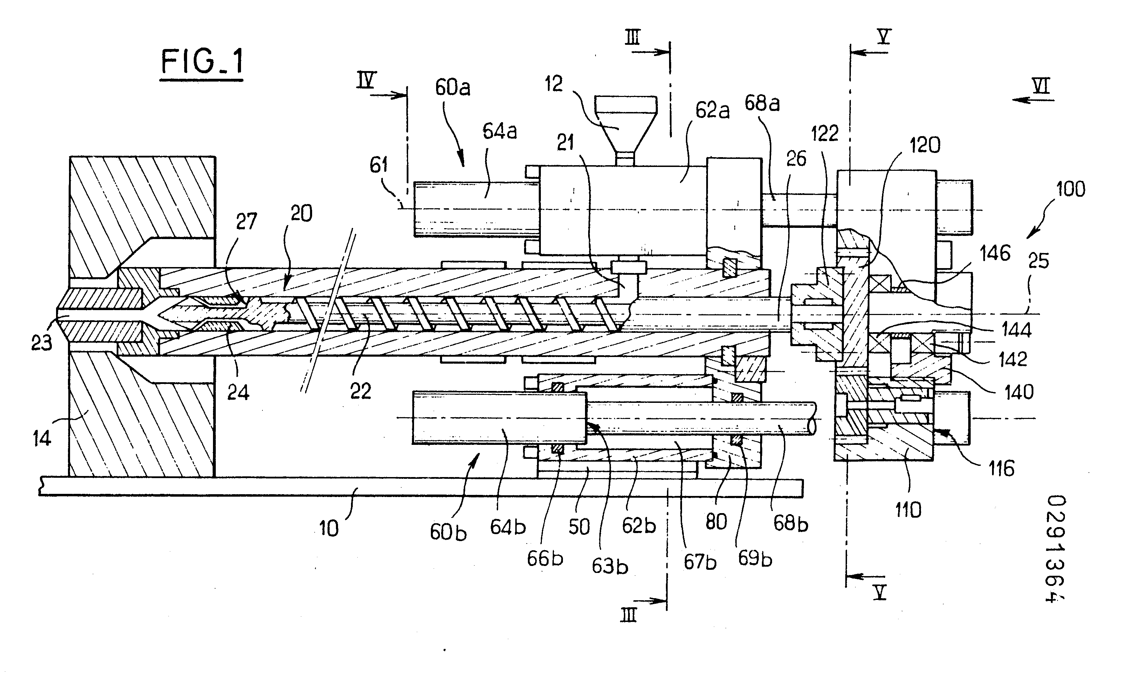

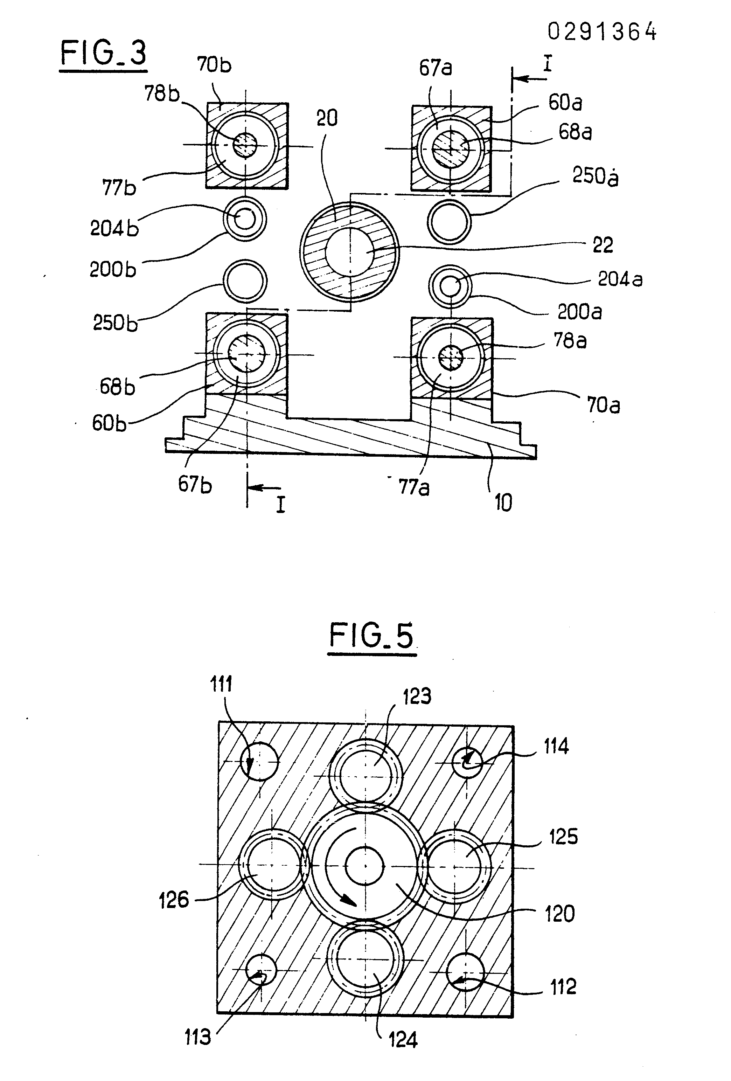

 - la figure 1 représente une vue schématique en coupe longitudinale d'une unité d'injection conforme à la présente invention, selon des plans de couple non coplanaires référencés I-I sur la figure 3,

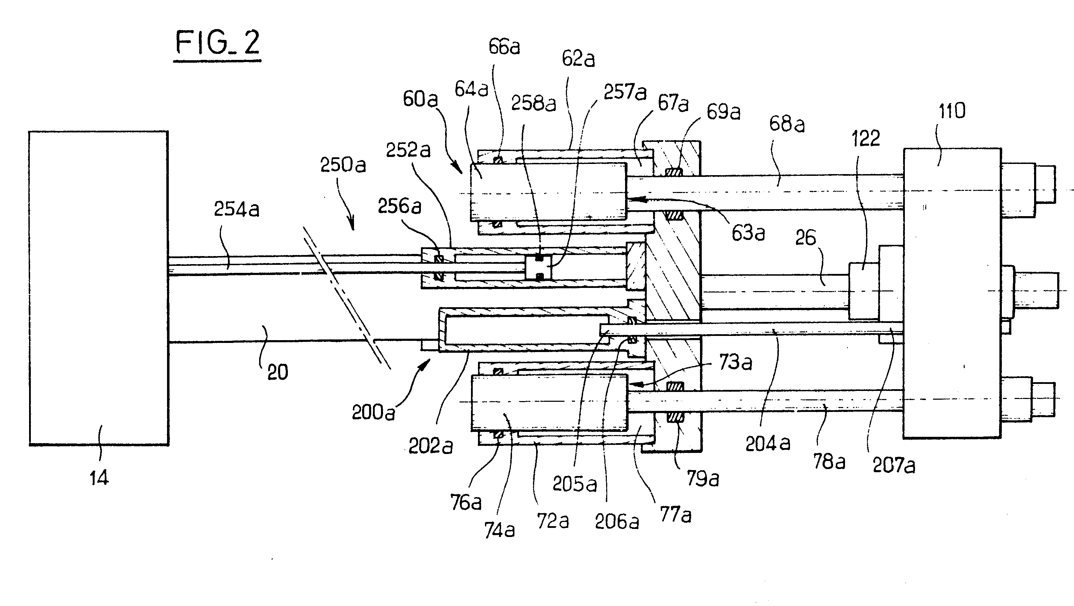

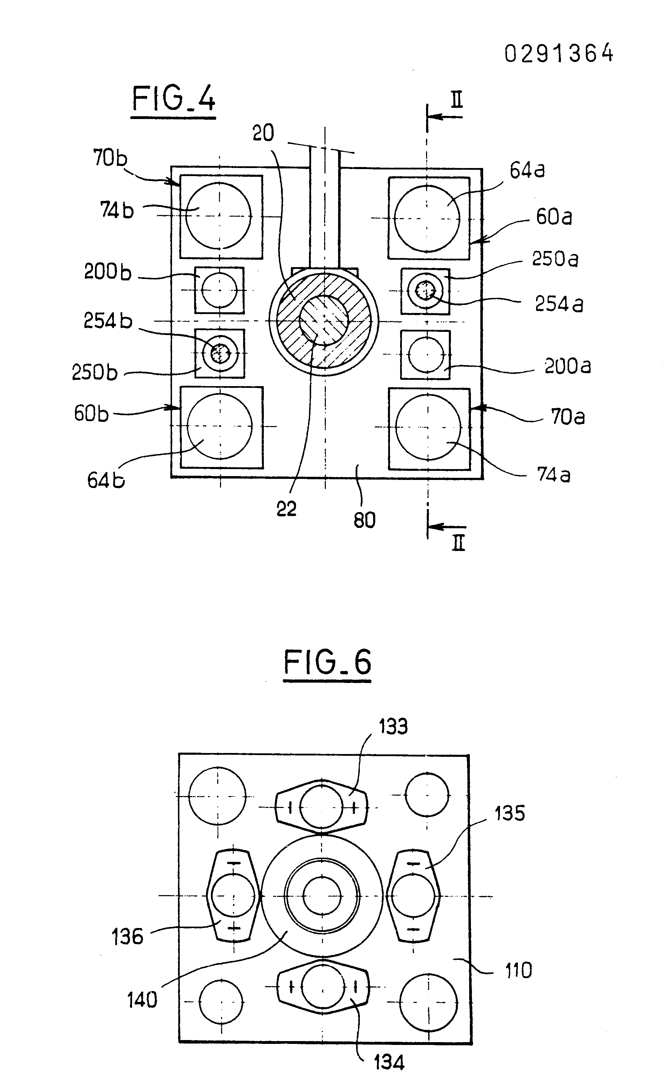

 - la figure 2 représente une autre vue schématique en coupe longitudinale de l'unité d'injection conforme à la présente invention selon le plan de coupe référencé II-II sur la figure 4,

 - la figure 3 représente une vue en coupe transversale de l'unité d'injection selon un plan de coupe référencé III-III sur la figure 1,

 - la figure 4 représente une autre vue en coupe transversale de l'unité d'injection conforme à la présente invention selon un plan de coupe référencé IV sur la figure 1,

 - la figure 5 représente une autre vue en coupe transversale de l'unité d'injection selon le plan de coupe référencé V-V sur la figure 1,

 - la figure 6 représente une vue transversale de l'unité d'injection conforme à l'invention telle qu'illustré par la flèche référencée VI sur la figure 1, et

 - la figure 7 représente une vue schématique des moyens d'alimentation et de commande de l'unité d'injection conforme à la présente invention.

On aperçoit sur les figures annexées une unité d'injection qui comprend pour l'essentiel un canon d'injection 20, deux ensembles de vérins d'injection 60, 70 et des moyens 300 de commande des vérins d'injection. Selon le mode de réalisation préférentiel illustré sur les figures annexées, chaque ensemble de vérins d'injection comprend deux vérins, 60a et 60b, d'une part, 70a, 70b, d'autre part.

L'axe du canon d'injection 20 est référencé 25. Le canon d'injection 20 est pourvu à une première extrémité d'un orifice radial d'alimentation 21. L'orifice d'alimentation 21 est aligné sur la goulotte d'une trémie 12. Ainsi, le produit à mouler est introduit dans le canon 20 par l'intermédiaire de l'orifice 21.

Le canon 20 est de plus muni à sa seconde extrémité d'une buse de sortie 23. La buse de sortie 23 est centrée sur l'axe 25. La buse 23 débouche dans la buse du moule portée par exemple par le plateau fixe 14.

Le plateau fixe 14 est lui-même porté par une embase 10.

Le corps du canon d'injection 20 est fixé, par sa première extrémité opposée à la buse de sortie 23, sur un plateau mobile 80 qui repose par l'intermédiaire d'une plaque support 50, sur l'embase 10.

Le canon d'injection 20 loge une vis piston 22 centrée sur l'axe 25. De façon classique en soi la vis piston 22 est pourvue sur son extrémité avant, adjacente à la buse de sortie 23, d'un clapet annulaire mobile 24.

Le fonctionnement du canon d'injection 20 logeant la vis piston 22 est pour l'essentiel le suivant.

Dans un premier temps, la vis piston 22 est commandée en rotation autour de l'axe 25 par des moyens 100. La rotation de la vis 22 assure la plastification de la matière pénétrant dans le canon 20 par l'orifice d'alimentation 21. Au cours de cette première phase de plastification, la vis 22 recule dans le canon 20 et la matière plastifiée s'accumule en avant du clapet 24, entre celui-ci et la buse de sortie 23.

Dans un second temps, les vérins d'injection 60a, 60b, 70a, 70b, sont mis en service pour provoquer un déplacement à translation de la vis piston 22 en rapprochement de la buse de sortie 23 pour assurer l'expulsion de la matière plastifiée hors du canon 20. Au cours de cette phase d'injection le clapet 24 prend appui sur une portée d'appui 27 ménagée sur la vis piston 22 pour interdire tout reflux de la matière plastique en arrière du clapet 24.

Le fonctionnement du canon d'injection, classique en soi, ne sera pas décrit plus en détail par la suite.

Comme indiqué précédemment, dans le cadre de la présente invention, les moyens d'entraînement associés à la vis piston 22 comprennent deux ensembles de vérins d'injection 60, 70 comportant, de préférence, chacun deux vérins 60a, 60b, 70a, 70b. Les vérins d'injection précités sont placés en parallèle entre le canon d'injection 20 et la vis piston 22.

Les deux vérins d'un même ensemble portent sur les dessins annexés des références numériques identiques assorties respectivement d'un indice a ou b. De plus, les deux vérins d'un même ensemble sont diametralement opposés par rapport à l'axe 25.

Les vérins ainsi appairés, 60a et 60b, d'une part, 70a et 70b d'autre part, ont des sections identiques. Cependant, les sections des vérins d'injection diffèrent d'un ensemble à l'autre. En d'autres termes, les sections des vérins portant la référence numérique 60 diffèrent de la section des vérins portant la référence numérique 70.

Les axes 61, 71 des vérins d'injection s'étendent parallèlement à l'axe 25 du canon. Les cylindres 62, 72 des vérins d'injection sont placés entre le plateau fixe 14 et le plateau mobile 80. Ils sont fixés sur le plateau mobile 80.

Les cylindres 62, 72 reçoivent une tige 68, 78 équipée d'un piston 64, 74. Un joint torique d'étanchéité 66, 76 porté par le cylindre 62, 72 repose contre la périphérie du piston 64, 74. De même un joint torique 69, 79 assure l'étanchéité sur la périphérie de la tige 68, 78.

Selon le mode de réalisation illustré sur les figures annexées, les cylindres 62, 72 étant obturés du côté de la tige 68, 78 par la plaque mobile 80, les joints 69, 79 sont portés par cette plaque 80.

Il est ainsi défini, pour chaque vérin d'injection 60, 70, une chambre de travail 67, 77, sur la périphérie de la tige 68, 78. La surface active de chaque vérin 60, 70 correspond à la surface en forme de couronne, référencée 63, 73 sur les figures annexées, qui est formée par le décrochement, transversal aux axes 61, 71, entre le piston 64, 74 et la tige 68, 78.

Les surfaces actives 63a, 63b des vérins 60a, 60b sont identiques. De même, les surfaces actives 73a, 73b des vérins 70a, 70b sont identiques. Par contre, les surfaces actives 63a, 63b ne sont pas égales aux surfaces 73a, 73b.

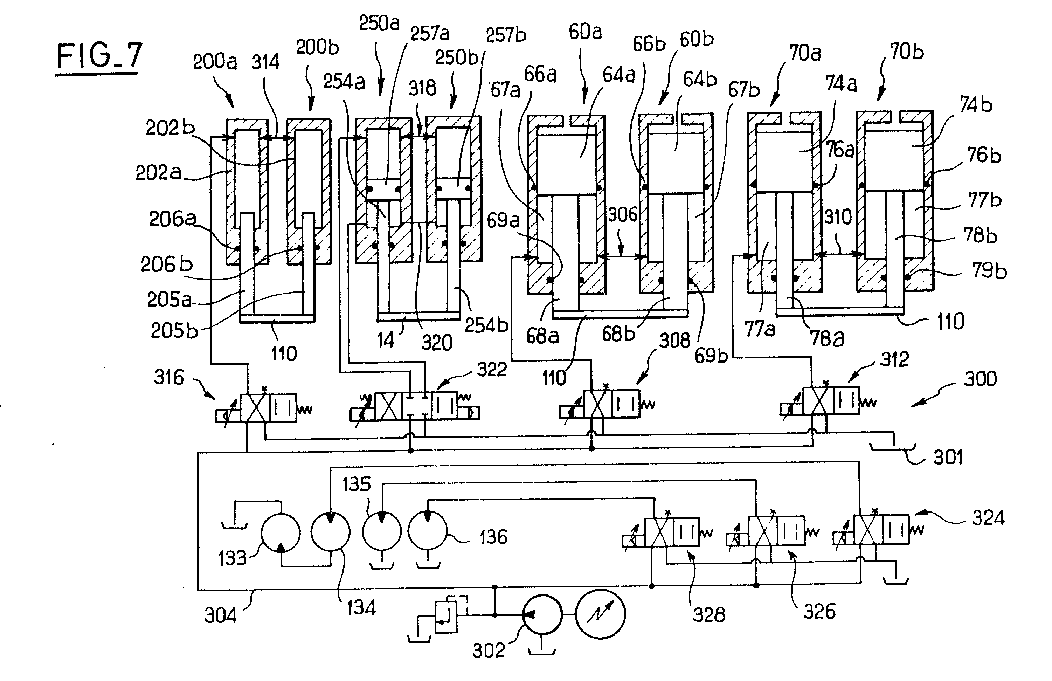

Selon le mode de réalisation illustré sur les figures annexées, les cylindres 62, 72 sont ouverts côté piston 64, 74. L'étanchéité est assurée par les joints toriques 66, 76 précités. Cependant, en variante, les pistons 64, 74 pourraient se déplacer à l'intérieur du cylindre 62, 72 comme illustré schématiquement sur la figure 7.

Les extrémités des tiges 68, 78 de vérins d'injection, opposées aux pistons 64, 74 et donc opposées au plateau 14 sont fixées sur un plateau mobile 110. Pour cela, les extrémités précitées des tiges 68, 78 peuvent être vissées dans des alésages taraudés ménagés dans le plateau mobile 110. Ces alésages s'étendent parallèlement à l'axe 25. Ils sont référencés 111, 112, 113 et 114 sur la figure 5.

L'homme de l'art comprendra aisément que l'injection de fluide à l'intérieur des chambres de travail 67, 77, des vérins d'injection tend à rétracter les tiges 68, 78 à l'intérieur des cylindres 62, 72, donc à rapprocher les plateaux 80 et 110 et de là à déplacer la vis piston 22 à translation en rapprochement de la buse de sortie 23. Au cours de cette phase d'injection, les vérins 60, 70 travaillent par traction.

La queue 26 de la vis piston 22 opposée à la buse de sortie 23 est fixée par l'intermédiaire d'une liaison 122 à un pignon mené central 120. Le pignon 120 est centré sur l'axe 25.

Le pignon principal 120 engrène avec quatre pignons menants 123, 124, 125, 126, régulièrement répartis sur sa périphérie.

Les pignons menants 123, 124, 125, 126 sont respectivement solidaires des arbres de sortie de moteurs 133, 134, 135, 136. Les moteurs 133, 136 sont de préférence des moteurs hydrauliques.

Les pignons 120, 123, 124, 125 et 126 sont portés à rotation autour d'axes parallèles à l'axe 25 par le plateau mobile 110. De même les moteurs 133, 134, 135 et 136 sont portés par le plateau mobile 110. Les moteurs 133, 136 sont accessibles sur la surface arrière 116 du plateau mobile 110, c'est-à-dire sur la surface du plateau mobile 110 opposée au plateau 80.

La vis piston 22 est liée à rotation et à translation, par l'intermédiaire de la liaison 122 avec le pignon central mené 120.

Ce pignon 120 est immobilisé à translation parallèlement à l'axe 25, sur le plateau mobile 110 à l'aide de deux butées à rouleaux 142, 144 complétées le cas échéant d'un fourreau à aiguilles 146. Les butées à rouleaux 142, 144 sont portées par un écrou 140 engagé dans un alésage taraudé complémentaire ménagé dans le plateau mobile 110 et débouchant sur la surface arrière 116 de celui-ci.

Ainsi, le retrait de l'écrou 140 permet de retirer la vis piston 22 logée dans le canon d'injection 20, pour remplacer cette vis piston 22 par une vis piston de profil différent, mais bien entendu de même section.

Deux autres vérins auxiliaires 200a, 200b, sont intercalés entre le plateau 80 et le plateau mobile 110. Les vérins auxiliaires 200 sont des vérins simple effet. Ils sont diamètralement opposés par rapport à l'axe 25.

Ils ont pour but d'opérer un faible recul de la vis piston 22 en éloignement de la buse de sortie 23, pour éviter, par succion et donc décompression, l'écoulement de matière après la plastification. En d'autres termes, les vérins auxiliaires 200 ont pour but de procéder à un léger éloignement relatif entre le plateau mobile 110 et le plateau 80 à la fin de la phase d'injection.

Selon le mode de réalisation illustré sur les figures annexées, les vérins auxiliaires 200 s'étendent parallèlement à l'axe 25. Les cylindres 202 sont placés entre les plateaux 14 et 80. Les cylindres 202 sont solidaires du plateau 80. La tige des vérins auxiliaires 200 traverse le plateau 80. Une première extrémité 205 des tiges 204 pénètre dans les cylindres 202. La seconde extrémité 207 des tiges 204 est fixée au plateau mobile 110.

Un joint torique 206 porté par le cylindre 202 repose contre la périphérie de la tige 204 pour assurer l'étanchéité du vérin auxiliaire 200.

Enfin, on notera à l'examen des figures annexées la présence de deux vérins d'approche 250 intercalés entre les plateaux 14 et 80.

Les vérins d'approche 250 ont pour fonction principale de maintenir la buse du canon d'injection en appui contre la buse du moule, tout en autorisant de façon accessoire le recul du canon d'injection à des fins de purge.

Les vérins d'approche 250 sont des vérins double effet.

Ils s'étendent parallèlement à l'axe 25 du canon.

Les cylindres 252 des vérins d'approche 250 sont placés entre les plateaux 14 et 80. Les cylindres 252 sont fixés sur le plateau 80. La tige 254 des vérins d'approche 250 est fixée sur le plateau 14. Elle porte par ailleurs un piston 257 logé dans le cylindre 252. Un joint 256 porté par le cylindre 252 et reposant contre la périphérie de la tige 254 assure l'étanchéité du passage recevant la tige. Un joint torique 258 porté par le piston 257 assure l'étanchéité entre les deux chambres de travail prévues dans le cylindre 252 de part et d'autre du piston 258.

On aperçoit sur la figure 7 annexée les quatre vérins d'injection 60a, 60b, 70a, 70b, les deux vérins auxiliaires 200a, 200b, les deux vérins d'approche 250a, 250b, et les moyens de commande 300.

Par ailleurs, sur la figure 7 on a référencé 301 un réservoir ou bâche et 302 une pompe de gavage. La pompe 302 débite dans une conduite principale 304.

Les chambres de travail 67a, 67b des vérins d'injection 60 sont reliées par l'intermédiaire d'une conduite 306. Ces chambres de travail 67a, 67b sont alimentées par l'intermédiaire d'un distributeur deux voies deux positions 308.

Dans une première position, les chambres de travail 67a, 67b communiquent avec la conduite principale 304. Les tiges 68a, 68b sont alors rétractées à l'intérieur des cylindres 62a, 62b en vue d'une injection.

Par contre, dans la seconde position des distributeurs 308, les chambres de travail 67a, 67b des vérins d'injection 60a, 67b communiquent avec le réservoir 301.

De façon similaire les chambres de travail 77a, 77b des vérins d'injection 70a, 70b sont reliées par l'intermédiaire d'une conduite 310. Les chambres de travail 77a, 77b sont alimentées par l'intermédiaire d'un distributeur 312 deux voies deux positions. Dans une première position du distributeur 312 les chambres de travail 77a, 77b sont reliées à la conduite principale 304. Par contre, dans la seconde position du distributeur 312 les chambres de travail 77a, 77b communiquent avec le réservoir 301.

Les chambres de travail des vérins auxiliaires 200a de succion sont reliées par l'intermédiaire d'une conduite 314. Les chambres de travail des vérins de succion 200a, 200b, sont alimentées par l'intermédiaire d'un distributeur deux voies deux positions 316. Dans une première position du distributeur 316, les chambres de travail des vérins 200a, 200b sont reliées à la conduite principale 304 pour opérer un léger recul de la vis piston 22 comme indiqué précédemment.

Par contre dans la seconde position du distributeur 316 les chambres de travail des vérins auxiliaires 200a, 200b communiquent avec le réservoir 301.

Comme indiqué précédemment, les vérins d'approche 250a, 250b possèdent deux chambres de travail respectivement de part et d'autre des pistons 257a, 257b.

Une première conduite 318 relie les deux premières chambres des vérins d'approche 250a, 250b. Une seconde conduite 320 relie les secondes chambres des vérins d'approche 250a, 250b.

Ces chambres sont par ailleurs alimentées par l'intermédiaire d'un distributeur deux voies trois positions 322.

Dans une première position du distributeur 322, les première et seconde chambres de travail des vérins d'approche 250a , 250b sont isolées du circuit d'alimentation.

Dans une seconde position du distributeur 322 la première chambre des vérins 250a, 250b est reliée à la conduite principale 304 tandis que la seconde chambre des vérins d'approche 250a, 250b est reliée au réservoir 301.

Enfin, dans une troisième position du distributeur 322 la première chambre de travail des vérins d'approche 250a, 250b est reliée au réservoir 301 tandis que la seconde chambre des vérins d'approche 250a, 250b est reliée à la conduite principale 304.

L'homme de l'art comprendra aisément que la première position du distributeur 322 permet d'assurer un maintien en position des vérins d'approche 250a, 250b et de là d'opérer une immobilisation relative de la buse d'injection du canon 20 contre la buse de moule. Par contre, les deuxième et troisième positions du distributeur 322 permettent de commander un déplacement relatif à translation du plateau 80 et de là un déplacement à translation du canon 20, par exemple en vue d'une purge.

On aperçoit également sur la figure 7 les moteurs hydrauliques 133, 134, 135 et 136, selon le mode de réalisation illustré sur la figure 7 annexée les moteurs 133 et 134 sont placés en série entre le réservoir 301 et un distributeur deux voies deux positions 324. Le moteur hydraulique 135 qui débite dans le réservoir 301 est alimenté par un distributeur deux voies deux positions 326. Enfin, le moteur 136 qui débite également dans le réservoir 301 est alimenté par un distributeur deux voies deux positions 328. Dans une première position des distributeurs 324, 326, 328, les moteurs hydrauliques associés sont inactifs, leur entrée étant reliée au réservoir 301.

Par contre, dans la seconde position des distributeurs 324, 326 et 328, les moteurs hydrauliques associés 133, 136 sont alimentés par la conduite principale 304.

La commande sélective des distributeurs 324, 326 et 328 permet de mettre en service un nombre variable de moteurs 133, 136 et de là de moduler le couple exercé sur la vis piston 22.

L'homme de l'art comprendra aisément que lorsque le distributeur 308 est placé en première position, les chambres de travail 67a, 67b des vérins d'injection 60a, 60b étant reliées à la conduite 304, les tiges 68a et 68b sont rétractées à l'intérieur des cylindres associés. Les vérins d'injection 60a, 60b appliquent sur la vis piston 22 une force $F_1$ proportionnelle à l'amplitude des surfaces actives 63a, 63b. Lorsque le distributeur 308 étant ramené en seconde position, et que le distributeur 312 est commuté en première position, les chambres de travail 77a, 77b étant reliées à la conduite 304, les tiges 78a, 78b sont rétractées à l'intérieur des cylindres associés. Les vérins 70a, 70b appliquent sur la vis piston 22 une force $F_2$ proportionnelle à l'amplitude des surfaces actives 73a, 73b. La force $F_2$ est supérieure à la force $F_1$ dans la mesure où l'amplitude des surfaces 73a, 73b est supérieure à l'amplitude des surfaces 63a, 63b.

Lorsque les distributeurs 308, 312 sont placés simultanément en première position, la résultante des forces appliquées sur la vis piston 22 par les vérins d'injection égale la somme des forces $F_1$ et $F_2$.

Par ailleurs, lorsqu'au cours d'une phase d'injection l'état des distributeurs 308, 312 est modifié, on obtient une modification correspondante de la force exercée sur la vis piston 22 et donc de la pression d'injection.

Bien entendu, la présente invention n'est pas limitée au mode de réalisation particulier qui vient d'être décrit mais s'étend à toutes variantes conformes à son esprit.

Ainsi par exemple si les deux ensembles de vérins 60, 70 travaillent à la traction, lors de l'injection, selon le mode de réalisation précité, on peut envisager de faire travailler ces vérins à la compression, en modifiant leur disposition.

**Revendications**

1. Unité d'injection pour presse du type comprenant un canon d'injection (20) pourvu, d'une part, à une première extrémité, d'un orifice d'alimentation (21) par lequel le produit à mouler est introduit dans le canon et d'autre part, à une seconde extrémité, d'une buse de sortie (23), le canon (20) logeant une vis piston (22) à clapet (24) mobile à la fois en rotation et en translation à l'intérieur du canon, pour injecter le produit sous pression, dans un moule, à travers la buse de sortie, lorsque la vis piston (22) est déplacée à translation vers la buse de sortie (23), caractérisée par le fait qu'elle comprend deux ensebles de vérins d'injection (60, 70) placés en parallèle entre le canon d'injection (20) et la vis piston (22), aptes à assurer le déplacement relatif à translation de la vis piston en rapprochement de la buse d'injection, les deux ensembles (60, 70) des vérins d'injection ayant des sections actives différentes, et des moyens de commande (308, 312) aptes à mettre en action sélectivement l'un choisi des ensembles de vérins d'injection ou les deux ensembles simultanément.

2. Unité d'injection selon la revendication 1, caractérisée par le fait que chaque ensemble de vérins d'injection (60, 70) comprend deux vérins (60a, 60b ; 70a, 70b) placés en parallèle et ayant des sections actives identiques.

3. Unité d'injection selon la revendication 2, caractérisée par le fait que les deux vérins (60a, 60b d'une part), (70a, 70b d'autre part) d'un même ensemble ayant des sections identiques sont diamètralement opposées par rapport à l'axe (25) du canon d'injection (20).

4. Unité d'injection selon l'une des revendications 1 à 3 , caractérisée par le fait que les corps (62, 72) des vérins d'injection (60, 70) sont solidaires du canon d'injection (20), tandis que les tiges (68, 78) des vérins d'injection sont solidaires de la vis piston (22).

5. Unité d'injection selon l'une des revendications 1 à 4, caractérisée par le fait que les tiges (68, 78) des vérins d'injection sont solidaires d'un plateau mobile (110) sur lequel est fixée la vis piston (22).

6. Unité d'injection selon l'une des revendications 1 à 5, caractérisée par le fait que la vis piston (22) est fixée sur un plateau mobile (110) qui porte des moteurs (133, 134, 135, 136) aptes à entraîner la vis piston (22) à rotation.

7. Unité d'injection selon la revendication 6, caractérisée par le fait que les moteurs (133, 134, 135, 136) sont placés sur la périphérie de la vis piston (22).

8. Unité d'injection selon l'une des revendications 1 à 7, caractérisée par le fait que la queue (26) de la vis piston (22) est liée à rotation et à translation avec un pignon mené central (120).

9. Unité d'injection selon l'une des revendications 5 à 7, caractérisée par le fait que le plateau mobile (110) reçoit un écrou (140) qui porte deux butées à rouleaux(142, 144) immobilisant la vis piston (22) à translation sur le plateau mobile (110) tout en autorisant un retrait de la vis piston (22) lorsque l'écrou est desserré.

10. Unité d'injection selon l'une des revendications 1 à 9, caractérisée par le fait que des vérins auxiliaires sont insérés entre le canon d'injection (20) et la vis piston (22) pour assurer un léger recul de la vis piston (22) en éloignement de la buse de sortie (23) après la fin de la phase d'injection.

FIG.1

FIG_2

## FIG.3

## FIG.5

## FIG_4

## FIG_6

0291364

FIG_7

Office européen
des brevets

**RAPPORT DE RECHERCHE EUROPEENNE**

Numero de la demande

EP  88 40 0616

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 076 475  (TRUEBLOOD) <br> * En entier * <br> --- | 1-6 | B 29 C   45/50 <br> B 29 C   45/82 |
| A | FR-A-2 173 748  (GUERIN) <br> * En entier * <br> --- | 1-6,10 | |
| A | FR-A-1 518 169  (DESMA-WERKE) <br> * Page 2, colonne de droite, ligne 44 - page 3, colonne de gauche, ligne 37; figure 2 * <br> --- | 1 | |
| A | US-A-3 335 464  (SCHWARTZ) <br> * Colonne 4, lignes 16-57; figures 3,4 * <br> --- | 1-6,9 | |
| A | FR-A-1 020 775  (ZONCO) <br> * En entier * <br> --- | 1 | |
| A | GB-A-  965 214  (THE PROJECTILE AND ENGINEERING CO.) <br> * En entier * <br> ----- | 6-8 | |

**DOMAINES TECHNIQUES RECHERCHES (Int. Cl.4)**

B 29 C
F 15 B

**Le présent rapport a été établi pour toutes les revendications**

| Lieu de la recherche | Date d'achèvement de la recherche | Examinateur |
|---|---|---|
| LA HAYE | 21-06-1988 | BOLLEN J.A.G. |